**Europäisches Patentamt**

**European Patent Office**

**Office européen des brevets**

(19)

(11) Veröffentlichungsnummer: **0 212 151**
A1

# (12) EUROPÄISCHE PATENTANMELDUNG

(21) Anmeldenummer: 86108799.7

(22) Anmeldetag: 27.06.86

(51) Int. Cl.⁴: **A 01 D 33/02**, A 01 D 33/00

---

(30) Priorität: 16.08.85 DE 3529416

(43) Veröffentlichungstag der Anmeldung: **04.03.87**
**Patentblatt 87/10**

(84) Benannte Vertragsstaaten: **AT BE CH DE FR GB IT LI NL SE**

(71) Anmelder: **Franz Grimme Landmaschinenfabrik GmbH & Co. KG., Wiesenstrasse 10, D-2845 Damme (DE)**

(72) Erfinder: **Grimme, Franz, jun., Thomasstrasse 3, D-2845 Damme (DE)**

(74) Vertreter: **Busse & Busse Patentanwälte, Postfach 1226 Grosshandelsring 6, D-4500 Osnabrück (DE)**

(54) Krauttrennvorrichtung für Kartoffelerntemaschinen.

(57) Die Krauttrennvorrichtung für Kartoffelerntemaschinen umfaßt zwei Endlosförderer (1, 2), von denen der erste Förderer (1) mit seinem Abgabeende dem Annahmeende des zweiten Förderers (2) für einen Gutübergang zugeordnet ist. Dabei ist im Übergangsbereich zwischen beiden Förderern eine an ein Gebläse angeschlossene Breitschlitzdüse (12) vorgesehen, deren Blasrichtung annähernd quer zur Bewegungsrichtung des Erntegutes bei dessen Übergang vom ersten (1) zum zweiten Förderer (2) ausgerichtet ist.

EP 0 212 151 A1

- 1 -

Krauttrennvorrichtung für Kartoffelerntemaschinen

Die Erfindung bezieht sich auf eine Krauttrennvorrichtung
für Kartoffelerntemaschinen gemäß dem Oberbegriff des
Anspruchs 1.

Bei einer bekannten Vorrichtung dieser Art ist der erste
Förderer ein Stabförderband, auf dem Erntegut in Gestalt von
Kartoffeln, Steinen und Kartoffelkraut herangefördert wird.
Der zweite Förderer ist als schrägansteigendes Igelband ausgebildet, dessen Borstenfeld von auf dieses auftreffenden
Kartoffeln und Steinen entgegen Förderrichtung des Fördertrums
überlaufen wird, eine Mitnahme von Krautteilen, insbesondere
auch Krautresten, in der Förderrichtung begünstigt und so eine
Krauttrennung herbeiführt. Bei einer derartigen Krauttrennvorrichtung läßt der Trennwirkungsgrad zu wünschen übrig,
da in der Ablaufrichtung der Kartoffeln und der Steine auch
Krautteile mitgerissen werden, was eine Nachtrennung erforderlich macht.

Dies gilt auch für eine Krauttrennvorrichtung, die im wesentlichen von einer Krautzupfwalze gebildet ist, die mit dem
Abgabeende des Siebförderbandes in Kartoffelerntemaschinen
zusammenwirkt und zwischen sich und dem Siebförderband Krautteile hindurch mitnimmt, während sie von Kartoffeln und Steinen
entgegen ihrer Drehrichtung überlaufen wird.

Der Erfindung liegt die Aufgabe zugrunde, eine Krauttrennvor-

- 2 -

richtung nach dem Oberbegriff mit verbesserter Trennwirkung zu schaffen, und die Erfindung löst diese Aufgabe mit den Merkmalen des kennzeichnenden Teils des Anspruchs 1. Hinsichtlich wesentlicher weiterer Ausgestaltungen wird auf die Ansprüche 2 und 3 verwiesen.

Die Krauttrennvorrichtung nach der Erfindung gewährleistet mit einfachen Mitteln ein hochwirksames Aussondern der Krautteile, insbesondere auch kleiner Krautreste, aus der aus Kartoffeln und Steinen bzw. größeren Erdkluten bestehenden Hauptmasse des Erntegutes bei dessen Übergang von einem ersten an einen zweiten Förderer. Hiermit geht auch einher eine verstärkte Reinigungswirkung durch Mitabführen von Bodenresten, die sich während des Gutüberganges lösen und separierbar werden. Die Krauttrennvorrichtung nach der Erfindung kann bei Krauttrennvorrichtungen der eingangs genannten Art realisiert werden, in welchem Falle der aus der Breitschlitzdüse austretende Luftstrom derart gerichtet wird, daß er die Krautteile an das Igelband bzw. an die Krautzupfwalze zwecks Erhöhung der Mitnahmewirkung andrückt. Die Krauttrennvorrichtung nach der Erfindung kann jedoch auch mit beliebigen anderen Endlosförderern verwirklicht werden, in welchem Falle sich der Bauaufwand und das Bauvolumen der mit der erfindungsgemäßen Krauttrennvorrichtung ausgestatteten Kartoffelerntemaschine erheblich verringert.

Weitere Einzelheiten und Vorteile ergeben sich aus der nachfolgenden Beschreibung und der Zeichnung, in der mehrere Ausführungsbeispiele des Gegenstands der Erfindung näher veranschaulicht sind. In der Zeichnung zeigen:

Fig. 1     in einer abgebrochenen Ausschnittdarstellung eine Seitenansicht einer ersten Ausführung einer Krauttrennvorrichtung nach der Erfindung,

Fig. 2     Darstellungen ähnlich Fig. 1 zur Veranschaulichung
bis 4     von drei abgewandelten weiteren Ausführungsformen.

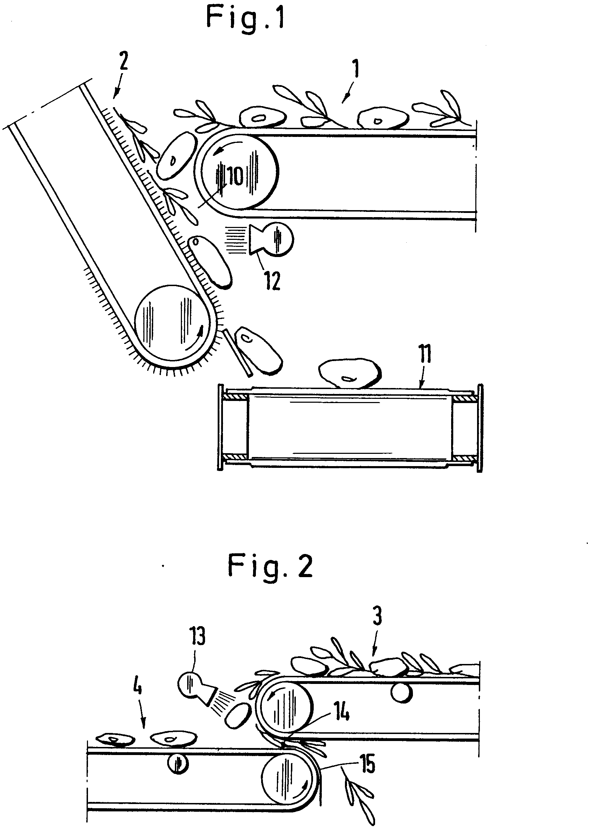

Die in Fig. 1 veranschaulichte Krauttrennvorrichtung bildet - ebenso wie die Ausführungen nach Fig. 2 bis 4 - Teil einer Kartoffelerntemaschine, die üblicherweise mit einer ganzen Reihe von Endlosförderern ausgerüstet ist, welche jeweils unterschiedliche Funktionen erfüllen. Die bei den verschiedenen dargestellten Ausführungsformen zusammenwirkenden Endlosförderer 1,2;3,4;8,9 erfüllen daher eine Funktion nicht nur als Teil der Krauttrennvorrichtung, sondern zugleich auch allgemeine Funktionen im Rahmen einer Kartoffelerntemaschine, worauf weiter unten noch eingegangen wird.

Bei der Ausführung nach Fig. 1 ist der Förderer 1 ein Zubringerband für das aus Kartoffeln, Steinen, groben Erdkluten sowie aus Kartoffelkraut bestehende Erntegut, das sich als gesondertes Band z.B. an das obere Ende des Siebförderbandes einer Kartoffelerntemaschine anschließen kann, das jedoch auch unmittelbar selbst vom Siebförderband gebildet sein kann. Der zweite Förderer 2 ist ein Igelband, wie es in Krauttrennvorrichtungen grundsätzlich bekannt ist, und die einander zugewandten Enden der Förderer 1,2 haben eine einen Gutübergang gewährleistende gegenseitige Zuordnung. Der zweite Förderer 2 hat ein verhältnismäßig steil ansteigendes Fördertrum, und auf das Fördertrum übergehendes Erntegut hat aufgrund seiner Schwerkraft das Bestreben, den Durchtrittsspalt 10 zwischen dem Abgabeende des ersten Förderers 1 und dem Fördertrum des zweiten Förderers 2 entgegen der Förderrichtung des zweiten Förderers zu passieren und auf einen Weiterförderer 11 zu gelangen. Krautteile werden von den Borsten des zweiten Förderers 2 zu einem erheblichen Teil an einem solchen Herabfallen gehindert und statt dessen zu einem oberen Abgabeende gefördert, an dem die Krautteile auf den Boden oder in einen Krautsammelbunker abgeworfen werden. Um sicherzustellen, daß Krautteile, auch sehr kleine Krautreste, sicher vom zweiten Förderer mitgenommen und daran gehindert werden, auf den Weiterförderer 11 zu gelangen, ist im Übergangsbereich zwischen beiden Förderern 1,2 eine an ein nicht näher dargestelltes

- 4 -

Gebläse angeschlossene Breitschlitzdüse 12 vorgesehen, deren Blasrichtung annähernd quer zur Bewegungsrichtung des Erntegutes bei dessen Übergang vom ersten zum zweiten Förderer ausgerichtet ist. Der aus der Breitschlitzdüse 12, die eine der Breite der Förderer 1,2 annähernd gleiche Breite besitzt, austretende Luftstrom erfaßt den Durchtrittsspalt 10 abwärts zu passieren bestrebte Krautteile und drückt diese für eine sichere und vollständige Mitnahme durch den zweiten Förderer 2 auf dessen Borstenfeld an. Da der Luftstrom den Durchtrittsspalt in Förderrichtung des Förderers 2 passiert, werden auch schwebende Krautteile erfaßt und an einem Übergang zum Weiterförderer 11 gehindert.

Bei der in Fig. 2 veranschaulichten Ausführung bilden die Förderer 3,4 beliebige, ohnehin benötigte Förderbänder einer Kartoffelerntemaschine. Zum Beispiel kann der Förderer 4 das Verlesetischband bilden. Das auf dem ersten Förderer 3 herangeförderte Erntegut ist bestrebt, auf dem zweiten Förderer 4 seine Förderrichtung fortzusetzen, jedoch werden Krautteile durch die Breitschlitzdüse 13 daran gehindert, deren Blasrichtung auf einen Durchtrittsspalt 14 zwischen den einander zugewandten Enden der beiden Förderer hin und der Förderrichtung des zweiten Förderers 4 entgegengerichtet ist. Unter der Wirkung des aus der Breitschlitzdüse 13 austretenden Luftstromes werden die Krautteile aus dem übergehenden Erntegutstrom herausgeblasen und durch den Durchtrittsschlitz 14 abgeführt, der unterseitig durch eine Abdeckung 15 begrenzt ist, die das Annahmeende des zweiten Förderers 4 im Bereich des Durchtrittsspaltes 14 übergreift. Auf diese Weise ist eine Förderwirkung des zweiten Förderers 4 im Bereich des Durchtritts-spaltes 14 auf die Krautteile ausgeschlossen, die dementsprechend lediglich unter Einwirkung des Blasluftstromes abgefördert werden.

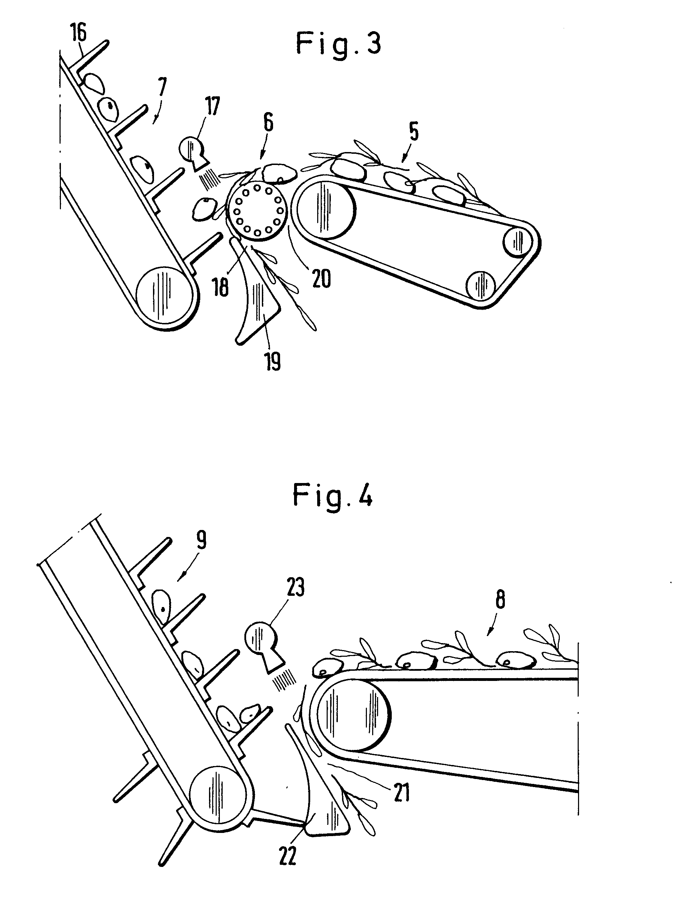

Bei der Ausführungsform nach Fig. 3 ist ebenso wie bei Fig. 4 der zweite Förderer 7 bzw. 9 als Höhenförderer ausgebildet,

- 5 -

dessen Förderband mit Mitnehmern 16 versehen ist. Zwischen dem Förderer 5 und dem Förderer 7 ist eine Übergabewalze 6 vorgesehen, die einen schonenden, verletzungsfreien Übergang der Kartoffeln vom Förderer 5 an den Förderer 7 gewährleisten soll. Diese Übergabewalze 6 bildet ihrerseits einen Endlosförderer, auch wenn sich die Förderwirkung nur auf einen Übergabebereich beschränkt. Im Übergabebereich zwischen den Förderer 6,7 ist wiederum eine an ein Gebläse angeschlossene Breitschlitzdüse 17 vorgesehen, deren Blasrichtung annähernd quer zur Bewegungsrichtung des Erntegutes im Übergangsbereich ausgerichtet und dabei auf einen Durchtrittsspalt 18 hin gerichtet ist, der sich zwischen den beiden Förderern 6,7 befindet und auf seiten des zweiten Förderers 7 einseitig durch eine Abdeckung 19 begrenzt ist, die das Annahmeende des zweiten Förderers 7 im Bereich des Durchtrittsspaltes 18 übergreift. Während die Kartoffeln vom Förderer 6 an den Förderer übergehen, gegebenenfalls auch Steine und grobe Erdkluten, werden durch den Blasluftstrom Krautteile separiert und durch den Durchtrittsspalt 18 abgefördert.

Zusätzlich zur Breitschitzdüse 17 oder an deren Stelle kann eine Breitschlitzdüse auch oberhalb des Spaltes 20 zwischen den Förderern 5 und 6 angeordnet und auf diesen Spalt hin gerichtet sein, um auch dort oder nur dort eine entsprechende Krauttrennung durchzuführen. In diesem Falle könnte für den an den Spalt 20 angrenzenden Bereich des Förderers 6 eine Abdeckung vorgesehen sein, welche eine der Blasförderrichtung entgegengesetzte Förderwirkung des Förderers 6 ausschließt.

Die Ausführung nach Fig. 4 ist der nach Fig. 3 ähnlich, jedoch fehlt hier die Übergabewalze. Der erste Förderer 8, z.B. das Siebförderband der Kartoffelerntemaschine, ist im Übergabesinne unmittelbar einem Höhenförderer 9 zugeordnet und begrenzt mit seinem Abgabeende einen Durchtrittsspalt 21, der andererseits von einer Abdeckung 22 für das Annahmeende des zweiten Förderers 9 begrenzt wird. Die Breitschlitzdüse 23 ist auch hier mit einer Blasrichtung angeordnet, die annähernd quer zur Bewegungsrichtung des Erntegutes im Übergangsbereich ausgerichtet und zum Durchtrittsspalt 21 hin gerichtet ist. Auch hier erfolgt daher eine Trennung der Krautteile vom übrigen Erntegut durch die Wirkung des Blasluftstromes und eine Abführung durch den Durchtrittsspalt 21 hindurch.

Der Blasluftstrom nimmt neben Krautteilen auch Erdreichreste mit, die sich z.B. aufgrund der Gutbewegungen beim Übergang von den Kartoffeln oder Steinen ablösen, so daß in Verbindung mit einem hohen Krauttrennwirkungsgrad auch eine verbesserte Säuberung der Kartoffeln erreicht wird.

0212151

- 7 -

Ansprüche:

1. Krauttrennvorrichtung für Kartoffelerntemaschinen, mit zwei Endlosförderern, von denen der erste Förderer mit seinem Abgabeende dem Annahmeende des zweiten Förderers für einen Gutübergang zugeordnet ist, dadurch gekennzeichnet, daß im Übergangsbereich zwischen beiden Förderern (1,2;3,4; 5,6,7;8,9) eine an ein Gebläse angeschlossene Breitschlitzdüse (12;13;17;23) vorgesehen ist, deren Blasrichtung annähernd quer zur Bewegungsrichtung des Erntegutes bei dessen Übergang vom ersten zum zweiten Förderer ausgerichtet ist.

2. Vorrichtung nach Anspruch 1, dadurch gekennzeichnet, daß die Blasrichtung der Breitschlitzdüse (12;13;17;23) auf einen Durchtrittsspalt (10;14;18;21) zwischen den einander zugewandten Enden der beiden Förderer (A) hin gerichtet ist.

3. Vorrichtung nach Anspruch 2, dadurch gekennzeichnet, daß das Annahmeende des zweiten Förderers (4;7;9) im Bereich des Durchtrittsspaltes (14;18;21) von einer Abdeckung (15;19;22) übergriffen und abgedeckt ist, die den Durchtrittsspalt einseitig begrenzt, und daß die Blasrichtung der Breitschlitzdüse (13;17;23) der Förderrichtung des zweiten Förderers (4;7;9) entgegengerichtet ist.

## Fig.1

## Fig. 2

0212151

# Fig.3

16
7
17
6
5
18
20
19

# Fig.4

9
23
8
21
22

**Europäisches Patentamt**

## EUROPÄISCHER RECHERCHENBERICHT

Nummer der Anmeldung

| | EINSCHLÄGIGE DOKUMENTE | | EP 86108799.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
| X | SOVIET INVENTIONS ILLUSTRATED, Sektion P, Week K12, 4. Mai 1983<br><br>DERWENT PUBLICATIONS LTD., London P12<br>Seite 8<br><br>  * SU-927 170 (GORYACHKIN AGRIC ENG) *<br><br>-- | 1,2 | A 01 D 33/02<br>A 01 D 33/00 |
| X | DE - C - 908 808 (HANS SACK)<br>  * Ansprüche 1,2; Fig. 1 *<br><br>-- | 1,2 | |
| A | US - A - 4 184 598 (R.M.COWLIN, C. P.G.LONG et al.)<br><br>-- | | |
| A | DE - B2 - 2 655 781 (DIETRICH, MARTIN)<br><br>---- | | RECHERCHIERTE SACHGEBIETE (Int. Cl.4)<br><br>A 01 D 17/00<br>A 01 D 21/00<br>A 01 D 33/00 |

Der vorliegende Recherchenbericht wurde für alle Patentansprüche erstellt.

| Recherchenort | Abschlußdatum der Recherche | Prüfer |
|---|---|---|
| WIEN | 16-09-1986 | MENTLER |